# EUROPEAN PATENT SPECIFICATION

(11) **EP 3 748 489 B1**
(45) Date of publication and mention of the grant of the patent: **25.06.2025**
(21) Application number: 20178185.3
(22) Date of filing: 04.06.2020
(51) Int. Cl.: G06F 3/14, G09B 5/14, G09B 5/06, G09G 5/12, H04N 13/366

(54) **IMAGE ADJUSTMENT DEVICE AND SYSTEM FOR DEMONSTRATION TEACHING**
BILDEINSTELLVORRICHTUNG UND -SYSTEM FÜR DEMONSTRATIONSUNTERRICHT
DISPOSITIF D'AJUSTEMENT D'IMAGE ET SYSTÈME D'APPRENTISSAGE DE DÉMONSTRATION

(30) Priority: 04.06.2019 CN 201910481989
(43) Date of publication of application: 09.12.2020
(73) Proprietor: Ningbo Thredim Optoelectronics Co., Ltd., Zhejiang 315100 (CN)
(72) Inventor: ZHAO, Fei, Ningbo, Zhejiang 315100 (CN); TANG, Caicai, Ningbo, Zhejiang 315100 (CN)
(74) Representative: SONN Patentanwälte GmbH & Co KG

(56) References cited:
- CN-A- 107 195 210
- US-A1- 2012 162 384
- US-A1- 2013 234 934
- US-A1- 2014 055 578
- US-A1- 2014 325 389

## Description

### TECHNICAL FIELD

Examples of the present invention relate to the field of terminal application technologies, and in particular, to an image adjustment device and system for demonstration teaching.

### BACKGROUND

The popularization of terminals results in wide application of the terminals. For example, terminals are used for demonstration teaching.

Usually, a teacher uses a parent terminal and each student uses a child terminal in demonstration teaching. That is, a demonstration teaching system includes one parent terminal and a plurality of child terminals. The parent terminal can control the child terminals. In addition to ensuring the consistency between content displayed on the teacher's interface and content displayed on the students' interfaces, it should be further ensured that the content displayed on the child terminals (terminals for students) is authentic and interesting to increase the students' enthusiasm for study during teaching demonstration. Therefore, how to ensure the authenticity and interest of the content displayed on the parent terminal and the plurality of child terminals is a problem that needs to be solved urgently.

US 2014/325389 A1 (WILLIS CHRISTOPHER [US] ET AL) discloses how to share an object from a source computing device to a destination device by simply moving and releasing the object in a specific region on the display of the source device.

US 2014/055578 A1 (WU YANBING [CN] ET AL) discloses adjusting a video signal according to a position information before and after a change in position of a viewer to enlarge an image in the video signal, and transmits the adjusted video signal to the video signal output means.

### SUMMARY

In view of this, examples of the present invention provide an image adjustment device and system for demonstration teaching. An objective of the present invention is to ensure the authenticity and interest of content displayed on a parent terminal and a plurality of child terminals, so as to achieve the best demonstration effect.

The scope of the invention is defined by the appended set of claims.

### BRIEF DESCRIPTION OF DRAWINGS

It becomes clear for a person with ordinary skill in the art to learn various other advantages and benefits by reading detailed descriptions of the following exemplary implementations. Accompanying drawings are merely used for showing the exemplary implementations, but not considered as a limitation on the present invention. In all accompanying drawings, a same reference symbol is used to indicate a same part. In the accompanying drawings:
FIG. 1 is a block diagram of composition of a first image adjustment device for demonstration teaching according to an example of the present invention;
FIG. 2 is a schematic diagram of a first image adjustment device for demonstration teaching and a second image adjustment device for demonstration teaching according to an example of the present invention;
FIG. 3 is a block diagram of composition of a second image adjustment device for demonstration teaching according to an example of the present invention; and
FIG. 4 is a block diagram of composition of a third image adjustment system for demonstration teaching according to an example of the present invention.

### DETAILED DESCRIPTION

Exemplary examples of the disclosure will be described below in more detail with reference to the accompanying drawings. Although the accompanying drawings show exemplary examples of the disclosure, it should be understood that the disclosure may be implemented in various forms and should not be limited to the examples set forth herein. On the contrary, these examples are provided so that the disclosure will be more fully understandable, and will fully convey the scope of the disclosure to those skilled in the art.

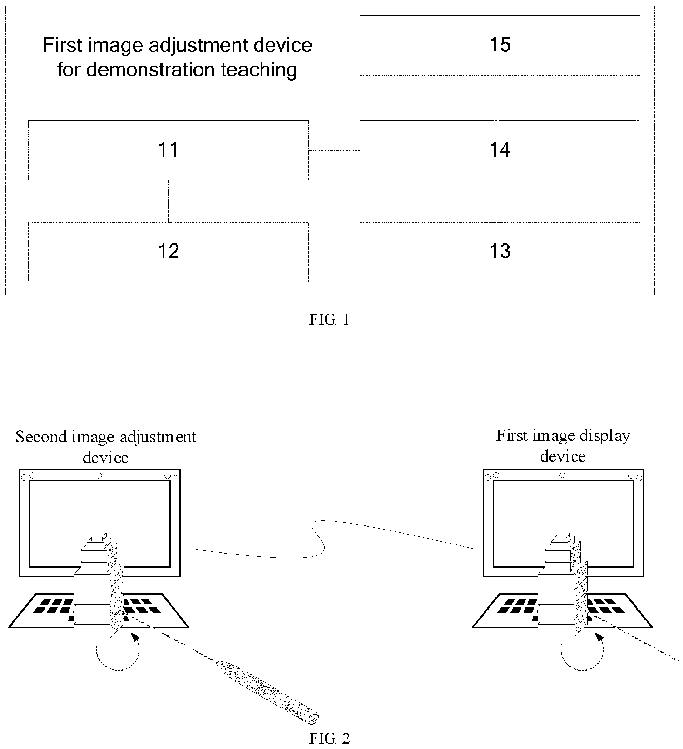

An example of the present invention provides a first image adjustment device for demonstration teaching. The device is applied to a controlled end (the first image adjustment device for demonstration teaching) in demonstration teaching. As shown in FIG. 1, the device includes a first transceiver 11, an interactive control device 12, a first eye tracking device 13, a first data control device 14, and a display device 15.

The first transceiver 11 is configured to receive a control command sent by a second image adjustment device for demonstration teaching, where the control command includes a to-be-displayed image and operation information with regard to the to-be-displayed image. The second image adjustment device for demonstration teaching can control the first image adjustment device for demonstration teaching by using an interactive control device 12. This example of the present invention is applied to a demonstration teaching process. FIG. 2 is a schematic diagram of a first image adjustment device for demonstration teaching and a second image adjustment device for demonstration teaching according to an example of the present invention. There are a plurality of first image adjustment devices for demonstration teaching, which are terminals for students (first operators). There are one second image adjustment device for demonstration teaching, which is a terminal for a teacher (a second operator). The second image adjustment device for demonstration teaching can control an operation of the first image adjustment device for demonstration teaching. The second image adjustment device for demonstration teaching controls the first image adjustment device for demonstration teaching through a network. The network control can be that the second image adjustment device for demonstration teaching controls the first image adjustment device for demonstration teaching directly through the Internet. The network control can be alternatively that the second image adjustment device for demonstration teaching controls the first image adjustment device for demonstration teaching by using a network switch element. Details are not limited in this example of the present invention.

In an optional implementation of this example of the present invention, the second image adjustment device for demonstration teaching can control the first image adjustment device for demonstration teaching on the premise that the second image adjustment device for demonstration teaching and the first image adjustment device for demonstration teaching synchronously display content. This mode can be referred to as a teaching demonstration mode. If it is not required that the second image adjustment device for demonstration teaching and the first image adjustment device for demonstration teaching synchronously display content, the second image adjustment device for demonstration teaching can disconnect control on the first image adjustment device for demonstration teaching. In this case, the first image adjustment device for demonstration teaching and the second image adjustment device for demonstration teaching are independent of each other. This mode can be referred to as a normal mode. It should be noted that the descriptions in this example of the present invention are all implemented when the second image adjustment device for demonstration teaching can control the first image adjustment device for demonstration teaching. The second image adjustment device for demonstration teaching can switch between the teaching demonstration mode and the normal mode as required.

The display terminal is a three-dimensional (3D) display terminal. The first image adjustment device for demonstration teaching can be controlled by the second image adjustment device for demonstration teaching. However, a difference exists when operators watch displayed content transmitted by the second image adjustment device for demonstration teaching, because of a position difference between different operators and the first image adjustment device for demonstration teaching. This directly leads to a difference between content displayed on the first image adjustment device for demonstration teaching and content displayed on the second image adjustment device for demonstration teaching. To solve the above problem, in this example of the present invention, the to-be-displayed image on the first image adjustment device for demonstration teaching is dynamically adjusted based on a position relationship between the first image adjustment device for demonstration teaching and an operator.

The first image adjustment device for demonstration teaching receives the control command sent by the second image adjustment device for demonstration teaching. The control command can be sent to the first image adjustment device for demonstration teaching together with the displayed content. Alternatively, the displayed content is sent first, and then the control command is sent. Delivery time of the control command is not limited in this example of the present invention.

The to-be-displayed image included in the control command transmitted by the second image adjustment device for demonstration teaching in this example of the present invention is an image to be displayed on the second image adjustment device for demonstration teaching. That is, the image is adjusted based on second eye positioning information and second pupillary distance information of the second operator to achieve the best display effect on the second image adjustment device for demonstration teaching. The operation information with regard to the to-be-displayed image is a moving track generated when the second operator performs a specific operation on the to-be-displayed image, for example, zooming in, adjusting, editing, and closing the to-be-displayed image.

The first eye tracking device 13 is configured to acquire first pupillary distance information of the first operator, and acquire first eye positioning information of the first operator for the first image adjustment device for demonstration teaching. In this example of the present invention, the second pupillary distance information and the second eye positioning information of the operator can be acquired by using any method in the prior art. Details are not described in this example of the present invention.

An objective of acquiring the first pupillary distance information and the first eye positioning information is to dynamically adjust the to-be-displayed image in real time based on different first pupillary distance information and different first eye positioning information, so as to achieve the best display effect on the first image adjustment device for demonstration teaching.

The first data control device 14 is configured to dynamically adjust an image pixel arrangement of the to-be-displayed image on the first image adjustment device for demonstration teaching based on the first pupillary distance information and the first eye positioning information that are acquired by the first eye tracking device and the operation information. The adjustment process is a process of real-time dynamic adjustment based on the first pupillary distance information, the first eye positioning information, and the operation information. When any one or a combination of the first pupillary distance information, the first eye positioning information, and the operation information changes, the image pixel arrangement is adjusted in real time.

The display device 15 is configured to display a virtual display image obtained after the first data control device 14 adjusts the image pixel arrangement.

According to the image adjustment device and system for demonstration teaching provided in this example of the present invention, the first transceiver is configured to receive the control command sent by the second image adjustment device for demonstration teaching, where the control command includes the to-be-displayed image and the operation information with regard to the to-be-displayed image, and the second image adjustment device for demonstration teaching can control the first image adjustment device for demonstration teaching by using the interactive control device; the first eye tracking device is configured to acquire the first pupillary distance information of the first operator and the first eye positioning information of the first operator for the first image adjustment device for demonstration teaching; the first data control device is configured to dynamically adjust the image pixel arrangement of the to-be-displayed image on the first image adjustment device for demonstration teaching based on the first pupillary distance information and the first eye positioning information that are acquired by the first eye tracking device and the operation information; and the display device is configured to display the virtual display image obtained after the first data control device adjusts the image pixel arrangement. In this example of the present invention, the to-be-displayed image transmitted by the second image adjustment device for demonstration teaching and the operation information with regard to the to-be-displayed image are determined. Then the image pixel arrangement on the first image adjustment device for demonstration teaching is adjusted based on the first pupillary distance information and the first eye positioning information. This ensures the authenticity and 3D interest of content displayed on the first image adjustment device for demonstration teaching.

In this example of the present invention, the control command further includes the second pupillary distance information of the second operator on the side of the second image adjustment device for demonstration teaching and the second eye positioning information of the second operator for the second image adjustment device for demonstration teaching. The first data control device 14 adjusts the image pixel arrangement based on the first pupillary distance information, the second pupillary distance information, the first eye positioning information, and the second eye positioning information, which is a premise of achieving consistency between content displayed on the first image adjustment device for demonstration teaching and content displayed on the second image adjustment device for demonstration teaching. Implementation methods include but are not limited to the following: a first calculation module is configured to calculate a first difference between the first pupillary distance information and the second pupillary distance information; a second calculation module is configured to calculate a second difference between the first eye positioning information and the second eye positioning information; and an adjustment module is configured to adjust the image pixel arrangement on the first image adjustment device for demonstration teaching based on the first difference and the second difference. The first calculation module, the second calculation module, and the adjustment module are not shown in the figure.

The first image adjustment device for demonstration teaching takes the first pupillary distance information and the first eye positioning information as reference, and calculates the difference between the first pupillary distance information and the second pupillary distance information and the difference between the first eye positioning information and the second eye positioning information to adjust the image pixel arrangement on the first image adjustment device for demonstration teaching. For example, when the first pupillary distance information is greater than the second pupillary distance information, the image pixel arrangement on the first image adjustment device for demonstration teaching is zoomed out. If the first eye positioning information is on the right of the second eye positioning information, the image pixel arrangement on the first image adjustment device for demonstration teaching is adjusted to the left. In actual application, adjustment can be performed based on both the pupillary distance information and the eye positioning information, or based only on the pupillary distance information or the eye positioning information. Details are not limited in this example of the present invention.

Operators of display terminals for students may vary with class. Therefore, the first operator is registered before using the first image adjustment device for demonstration teaching, so that the image pixel arrangement is adjusted in real time based on different operators. This enhances the authenticity and diversity of the to-be-displayed image. Further referring to FIG. 2, the first eye tracking device 13 is further configured to perform face recognition on an operator, and extract an eye movement and duration of watch on the first image adjustment device for demonstration teaching; and if the eye movement and the duration of watch meet a preset condition threshold, determine the operator as the first operator, and identity and register the operator. The operator is registered after being determined as the first operator, so that the image pixel arrangement can be adjusted on a first display interface without detecting in real time whether the first operator changes. This saves processing resources to some extent.

In the process of using the first image adjustment device for demonstration teaching, the first operator may go out for a long time or the teaching demonstration may end. In this case, to save resources used by the display terminal, the first eye tracking device 13 is further configured to detect in real time a period of time in which the first operator does not watch the first image adjustment device for demonstration teaching, and deregister the identified and registered first operator if determining that the period of time exceeds a preset interruption threshold.

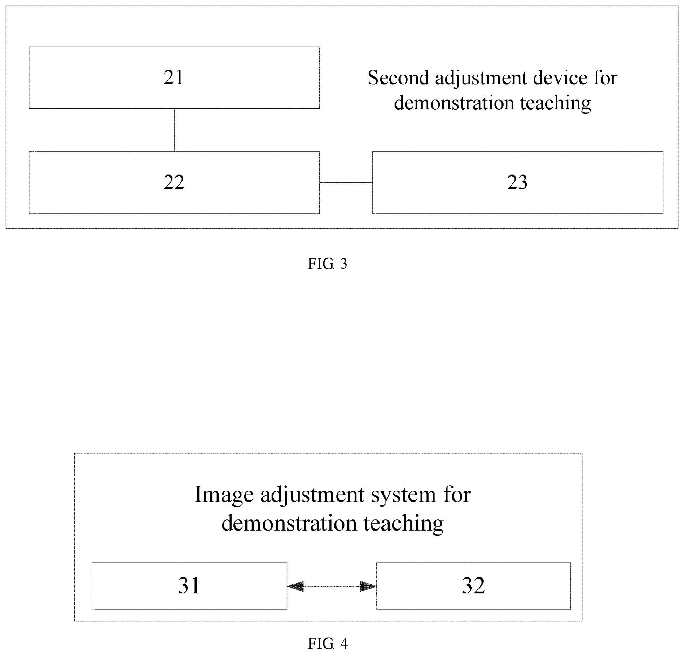

An example of the present invention further provides a second image adjustment device for demonstration teaching. The device is applied to a control end (the second image adjustment device for demonstration teaching) in demonstration teaching. As shown in FIG. 3, the device includes a second eye tracking device 21, a second data control device 22, and a second transceiver 23.

The second eye tracking device 21 is configured to acquire second pupillary distance information of a second operator (for example, between a second operator and the second image adjustment device for demonstration teaching); and locate the second operator's eye to determine second eye positioning information of the second operator for the second image adjustment device for demonstration teaching. In this example of the present invention, first pupillary distance information and first eye positioning information of an operator can be acquired by using any method in the prior art. Details are not described in this example of the present invention.

An objective of acquiring the second pupillary distance information and the second eye positioning information is to adjust an image pixel arrangement of content displayed on the second image adjustment device for demonstration teaching.

It should be noted that the first pupillary distance information and the first eye positioning information that are acquired by a first image adjustment device for demonstration teaching and the second pupillary distance information and the second eye positioning information that are acquired by the second image adjustment device for demonstration teaching are independently calculated by the first image adjustment device for demonstration teaching and the second image adjustment device for demonstration teaching. The calculation performed by the first image adjustment device and the calculation performed by the second image adjustment device do not interfere with each other.

The second eye tracking device 21 is further configured to trace a position change caused by an operation on a to-be-displayed image, and generate operation information with regard to the to-be-displayed image based on the position change. The to-be-displayed image is obtained after adjustment performed by the second image adjustment device for demonstration teaching. That is, the adjustment has been performed based on the second eye positioning information and the second pupillary distance information of the operator. The best display effect of the to-be-displayed image is achieved on the second image adjustment device for demonstration teaching. The operation information with regard to the to-be-displayed image is a moving track generated when the operator performs a specific operation on the to-be-displayed image, for example, zooming in, adjusting, editing, and closing the to-be-displayed image. Operations on the to-be-displayed image are usually performed by using a mouse, stylus, interactive pen, and the like. In this example of the present invention, descriptions are provided by using the interactive pen as an example. The interactive pen is shown in FIG. 2 and is connected to the second image adjustment device for demonstration teaching in a wireless manner.

The second data control device 22 is configured to adjust an image pixel arrangement of the to-be-displayed image on the second image adjustment device for demonstration teaching based on the second pupillary distance information and the second eye positioning information that are acquired by the second eye tracking device and a preset adjustment threshold. The preset adjustment threshold records a mapping relationship between the second pupillary distance information, the second eye positioning information, and the image pixel arrangement. The preset adjustment threshold may be set in advance for a certain window or for an entire display interface. Details need to be determined based on different application scenarios. However, the mapping relationship between the first pupillary distance information, the first eye positioning information, and the image pixel arrangement recorded by the preset adjustment threshold is fixed regardless of application scenario.

The second transceiver 23 is configured to send a control command to the first image adjustment device for demonstration teaching, where the control command includes the to-be-displayed image and the operation information, so that the first image adjustment device for demonstration teaching adjusts the image pixel arrangement based on the to-be-displayed image and the operation information.

The second eye tracking device 21 is further configured to perform face recognition on the operator, and extract an eye movement and duration of watch on the second image adjustment device for demonstration teaching; and
if the eye movement and the duration of watch meet a preset condition threshold, determine the operator as the second operator, and identify and register the operator.

The second eye tracking device 21 performs the identification and registration to prevent interference from a bystander, so as to ensure the best watch angle for the operator. In this way, the best 3D effect can be achieved on the second image adjustment device for demonstration teaching.

A specific operation process is as follows: First, face detection is performed to determine the number of persons currently watching the display interface; then eye tracking is performed, where the tracking includes tracking an eye movement and duration of watch on the second image adjustment device for demonstration teaching; and a person who watches the display interface for a longer time with less eye movements is determined as the operator.

The determined operator is then registered, so that the image pixel arrangement can be adjusted on a second display interface without detecting in real time whether the operator changes. This saves processing resources to some extent.

The second eye tracking device 21 is further configured to detect in real time a period of time in which the second operator does not watch the second image adjustment device for demonstration teaching, and deregister the identified and registered operator if determining that the period of time exceeds a preset interruption threshold. The real-time eye tracking aims to determine whether the operator leaves. The preset interruption threshold in this example of the present invention is an empirical value, which can be set to 5 minutes, 10 minutes, or the like. The specific value is not limited in this example the present invention.

In a specific application process, the eye tracking device 21 may perform the eye tracking when the second operator watches a certain window or the entire display interface. The identified and registered operator is deregistered provided that the period of time exceeds the preset interruption threshold, and so on.

In an optional implementation of this example of the present invention, the second data control device 22 is further configured to adjust in real time the image pixel arrangement on the second image adjustment device for demonstration teaching based on the second pupillary distance information, the second eye positioning information, and a distance between the second operator's eye and the second image adjustment device for demonstration teaching. In this implementation, the display effect can be adjusted to some extent. However, it cannot be determined whether the display effect is the best 3D display effect.

The second transceiver 21 is further configured to send the control command to the first image adjustment device for demonstration teaching based on a group number, where a plurality of first image adjustment devices for demonstration teaching each correspond to a unique group number. There can be a plurality of second image adjustment devices for demonstration teaching in a same local area network. The second image adjustment devices for demonstration teaching can independently control the first image adjustment devices for demonstration teaching by using the group number. The second image adjustment device for demonstration teaching sends the group number together with the control command. Only the first image adjustment device for demonstration teaching corresponding to the group number can receive the control command.

An example of the present invention further provides a first image adjustment device for demonstration teaching. The first image adjustment device for demonstration teaching includes the first image adjustment device for demonstration teaching shown in FIG. 1.

An example of the present invention further provides a second image adjustment device for demonstration teaching. The second image adjustment device for demonstration teaching includes the second image adjustment device for demonstration teaching shown in FIG. 3.

An example of the present invention further provides an image adjustment system for demonstration teaching. As shown in FIG. 4, the system includes a first image adjustment device 31 for demonstration teaching and a second image adjustment device 32 for demonstration teaching.

According to the image adjustment system for demonstration teaching provided in this example of the present invention, a first transceiver 11 is configured to receive a control command sent by the second image adjustment device for demonstration teaching, where the control command includes a to-be-displayed image and operation information with regard to the to-be-displayed image, and the second image adjustment device 12 for demonstration teaching can control the first image adjustment device for demonstration teaching by using an interactive control device; a first eye tracking device 13 is configured to acquire first pupillary distance information of a first operator and first eye positioning information of the first operator for the first image adjustment device for demonstration teaching; a first data control device 14 is configured to dynamically adjust an image pixel arrangement of the to-be-displayed image on the first image adjustment device for demonstration teaching based on the first pupillary distance information and the first eye positioning information that are acquired by the first eye tracking device and the operation information; and a display device 15 is configured to display a virtual display image obtained after the first data control device adjusts the image pixel arrangement. In this example of the present invention, the to-be-displayed image transmitted by the second image adjustment device for demonstration teaching and the operation information with regard to the to-be-displayed image are determined. Then the image pixel arrangement on the first image adjustment device for demonstration teaching is adjusted based on the first pupillary distance information and the first eye positioning information. This ensures the authenticity and 3D interest of content displayed on the first image adjustment device for demonstration teaching.

Those skilled in the art should understand that the embodiments of the present application may be provided as a method, a system, or a computer program product. Therefore, the present application may use a form of hardware only embodiments, software only embodiments, or embodiments with a combination of software and hardware. Moreover, the present application may use a form of a computer program product that is implemented on one or more computer-usable storage media (including but not limited to a disk memory, a CD-ROM, an optical memory, and the like) that include computer-usable program codes.

The present invention is described with reference to the flowcharts and/or block diagrams of the method, the device (system), and the computer program product according to the examples of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams. These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, the computing device includes one or more processors (CPUs), input/output interfaces, network interfaces, and memory.

The memory may be non-persistent memory, random access memory (RAM) and/or non-volatile memory in a computer readable medium, such as a read only memory (ROM) or flash memory (flash RAM). The memory is an example of the computer readable medium.

The computer readable medium includes persistent, non-persistent, movable, and unmovable media that may implement information storage by using any method or technology. The information can be a computer readable instruction, a data structure, a program module, or other data. Examples of the computer storage medium include but are not limited to a phase change RAM (PRAM), a static RAM (SRAM), a dynamic RAM (DRAM), a RAM of another type, a read-only memory (ROM), an electrically erasable programmable ROM (EEPROM), a flash memory or another memory technology, a compact disc ROM (CD-ROM), a digital versatile disc (DVD) or another optical storage, a cassette, a cassette magnetic disk storage, or another magnetic storage device or any other non-transmission medium. The computer storage medium can be configured to store information that can be accessed by a computing device. As described in the specification, the computer readable medium does not include computer readable transitory media such as a modulated data signal and a carrier.

It should also be noted that the term "comprise", "include", or any other variant thereof is intended to encompass a non-exclusive inclusion, such that a process, method, product, or device that includes a series of elements includes not only those elements, but also other elements not explicitly listed, or elements that are inherent to such a process, method, product, or device. Without more restrictions, an element defined by the phrase "including a ..." does not exclude the presence of another same element in a process, method, product, or device that includes the element.

Those skilled in the art should understand that the embodiments of the present application may be provided as a method, a system, or a computer program product. Therefore, the present application may use a form of hardware only embodiments, software only embodiments, or embodiments with a combination of software and hardware. Moreover, the present application may use a form of a computer program product that is implemented on one or more computer-usable storage media (including but not limited to a disk memory, a CD-ROM, an optical memory, and the like) that include computer-usable program codes.

The foregoing is merely illustrative of the preferred examples of the present application and is not intended to limit the present application, and various changes and modifications can be made to the present application by those skilled in the art, within the scope of the invention.

## Claims

1. A first image adjustment device (31) for demonstration teaching comprising:
a first transceiver (11), configured to receive a control command sent by a second image adjustment device (32) for demonstration teaching, wherein the control command comprises a to-be-displayed image and operation information with regard to the to-be-displayed image, and the second image adjustment (32) device for demonstration teaching can control the first image adjustment device (31) for demonstration teaching by using an interactive control device (12);
a first eye tracking device (13), configured to acquire first pupillary distance information of a first operator, and acquire first eye positioning information of the first operator for the first image adjustment device (31) for demonstration teaching;
a first data control device (14), configured to dynamically adjust an image pixel arrangement of the to-be-displayed image on the first image adjustment device (31) for demonstration teaching based on the first pupillary distance information and the first eye positioning information that are acquired by the first eye tracking device (13) and the operation information; and
a display device (15), configured to display a virtual display image obtained after the first data control device (14) adjusts the image pixel arrangement, wherein the display device (15) is a 3D display;
wherein the operation information is generated with regard to the to-be-displayed image based on a position change caused by an operation on the to-be-displayed image;
wherein the control command further comprises second pupillary distance information of the second operator on the side of the second image adjustment device (32) for demonstration teaching, and second eye positioning information of the second operator for the second image adjustment device (32) for demonstration teaching; and
the first data control device (14) comprises:
a first calculation module, configured to calculate a first difference between the first pupillary distance information and the second pupillary distance information;
a second calculation module, configured to calculate a second difference between the first eye positioning information and the second eye positioning information; and
an adjustment module, configured to adjust the image pixel arrangement of the to-be-displayed image on the first image adjustment device (31) for demonstration teaching based on the first difference and the second difference.

2. The device according to claim 1, **characterized in that** the first eye tracking device (13) is further configured to perform face recognition on an operator, and extract an eye movement and duration of watch on the first image adjustment device (31) for demonstration teaching; and if the eye movement and the duration of watch meet a preset condition threshold, determine the operator as the first operator, and identity and register the operator.

3. The device according to claim 2, **characterized in that** the first eye tracking device (13) is further configured to detect in real time a period of time in which the first operator does not watch the first image adjustment device (31) for demonstration teaching, and deregister the identified and registered first operator if determining that the period of time exceeds a preset interruption threshold.

## Patentansprüche

1. Eine erste Bildanpassungsvorrichtung (31) für Demonstrationsunterricht aufweisend:
ein erstes Sende- und Empfangsgerät (11), das dazu konfiguriert ist, einen Steuerbefehl zu empfangen, der von einer zweiten Bildanpassungsvorrichtung (32) für Demonstrationsunterricht gesendet wird, wobei der Steuerbefehl ein anzuzeigendes Bild und Betriebsinformationen bezüglich des anzuzeigenden Bildes aufweist, und wobei die zweite Bildanpassungsvorrichtung (32) für Demonstrationsunterricht dazu eingerichtet ist, die erste Bildanpassungsvorrichtung (31) für Demonstrationsunterricht mittels einer interaktiven Steuervorrichtung (12) zu steuern;
eine erste Augenverfolgungsvorrichtung (13), die dazu konfiguriert ist, erste Pupillenabstandsinformationen eines ersten Bedieners zu erfassen sowie erste Augenpositionsinformationen des ersten Bedieners für die erste Bildanpassungsvorrichtung (31) für Demonstrationsunterricht zu erfassen;
eine erste Datensteuervorrichtung (14), die dazu konfiguriert ist, basierend auf den von der ersten Augenverfolgungsvorrichtung (13) erfassten ersten Pupillenabstandsinformationen und ersten Augenpositionsinformationen sowie den Betriebsinformationen, eine Bildpixelanordnung des anzuzeigenden Bildes auf der ersten Bildanpassungsvorrichtung (31) für Demonstrationsunterricht dynamisch anzupassen; und
eine Anzeigevorrichtung (15), die dazu konfiguriert ist, ein virtuelles Anzeige-Bild anzuzeigen, das nach Anpassung der Bildpixelanordnung durch die erste Datensteuervorrichtung (14) erhalten wird, wobei die Anzeigevorrichtung (15) eine 3D-Anzeige ist;
wobei die Betriebsinformationen bezüglich des anzuzeigenden Bildes basierend auf einer Positionsänderung erzeugt werden, die durch eine Bedienung am anzuzeigenden Bild verursacht wird;
wobei der Steuerbefehl ferner zweite Pupillenabstandsinformationen des zweiten Bedieners auf der Seite der zweiten Bildanpassungsvorrichtung (32) für Demonstrationsunterricht und zweite Augenpositionsinformationen des zweiten Bedieners für die zweite Bildanpassungsvorrichtung (32) für Demonstrationsunterricht aufweist; und
wobei die erste Datensteuervorrichtung (14) aufweist:
ein erstes Berechnungsmodul, das dazu konfiguriert ist, eine erste Differenz zwischen den ersten Pupillenabstandsinformationen und den zweiten Pupillenabstandsinformationen zu berechnen;
ein zweites Berechnungsmodul, das dazu konfiguriert ist, eine zweite Differenz zwischen den ersten Augenpositionsinformationen und den zweiten Augenpositionsinformationen zu berechnen; und
ein Anpassungsmodul, das dazu konfiguriert ist, die Bildpixelanordnung des anzuzeigenden Bildes auf der ersten Bildanpassungsvorrichtung (31) für Demonstrationsunterricht basierend auf der ersten Differenz und der zweiten Differenz anzupassen.

2. Vorrichtung nach Anspruch 1, **dadurch gekennzeichnet, dass** die erste Augenverfolgungsvorrichtung (13) ferner dazu konfiguriert ist, eine Gesichtserkennung bei einem Bediener durchzuführen, eine Augenbewegung und Betrachtungsdauer auf der ersten Bildanpassungsvorrichtung (31) für Demonstrationsunterricht zu extrahieren; und falls die Augenbewegung und die Betrachtungsdauer einen voreingestellten Schwellenwert erfüllen, den Bediener als ersten Bediener zu bestimmen sowie den Bediener zu identifizieren und zu registrieren.

3. Vorrichtung nach Anspruch 2, **dadurch gekennzeichnet, dass** die erste Augenverfolgungsvorrichtung (13) ferner dazu konfiguriert ist, in Echtzeit einen Zeitraum zu erfassen, während dessen der erste Bediener die erste Bildanpassungsvorrichtung (31) für Demonstrationsunterricht nicht betrachtet, und den identifizierten und registrierten ersten Bediener abzumelden, falls festgestellt wird, dass der Zeitraum einen voreingestellten Unterbrechungsschwellenwert überschreitet.

## Revendications

1. Premier dispositif de réglage d'image (31) destiné à l'enseignement par démonstration, comprenant:
un premier émetteur-récepteur (11), configuré pour recevoir une commande de contrôle envoyée par un deuxième dispositif de réglage d'image (32) destiné à l'enseignement par démonstration, dans lequel la commande de contrôle comprend une image à afficher et des informations de fonctionnement relatives à l'image à afficher, et le deuxième dispositif de réglage d'image (32) destiné à l'enseignement par démonstration peut contrôler le premier dispositif de réglage d'image (31) destiné à l'enseignement par démonstration en utilisant un dispositif de commande interactif (12);
un premier dispositif de suivi oculaire (13), configuré pour acquérir des premières informations de distance pupillaire d'un premier opérateur, et acquérir des premières informations de positionnement oculaire du premier opérateur pour le premier dispositif de réglage d'image (31) destiné à l'enseignement par démonstration;
un premier dispositif de contrôle de données (14), configuré pour ajuster dynamiquement une disposition des pixels de l'image à afficher sur le premier dispositif de réglage d'image (31) pour l'enseignement par démonstration sur la base des premières informations de distance pupillaire et des premières informations de positionnement oculaire qui sont acquises par le premier dispositif de suivi oculaire (13) et des informations de fonctionnement; et
un dispositif d'affichage (15), configuré pour afficher une image d'affichage virtuelle obtenue après que le premier dispositif de contrôle de données (14) a ajusté la disposition des pixels de l'image, dans lequel le dispositif d'affichage (15) est un affichage 3D;
dans lequel les informations de fonctionnement sont générées en ce qui concerne l'image à afficher sur la base d'un changement de position provoqué par une opération sur l'image à afficher;
dans lequel la commande de contrôle comprend en outre des informations de distance pupillaire secondaire du deuxième opérateur du côté du deuxième dispositif de réglage d'image (32) pour l'enseignement par démonstration, et des deuxièmes informations de positionnement oculaire secondaire du deuxième opérateur pour le deuxième dispositif de réglage d'image (32) pour l'enseignement par démonstration; et
le premier dispositif de contrôle de données (14) comprend:
un premier module de calcul, configuré pour calculer une première différence entre les premières informations de distance pupillaire et les deuxièmes informations de distance pupillaire;
un deuxième module de calcul, configuré pour calculer une deuxième différence entre les premières informations de positionnement oculaire et les deuxièmes informations de positionnement oculaire ; et
un module de réglage, configuré pour régler la disposition des pixels de l'image à afficher sur le premier dispositif de réglage d'image (31) pour l'enseignement par démonstration sur la base de la première différence et de la deuxième différence.

2. Le dispositif selon la revendication 1, **caractérisé en ce que** le premier dispositif de suivi oculaire (13) est en outre configuré pour effectuer une reconnaissance faciale sur un opérateur, et extraire un mouvement oculaire et une durée d'observation sur le premier dispositif de réglage d'image (31) pour l'enseignement par démonstration; et si le mouvement oculaire et la durée d'observation satisfont à un seuil de condition prédéfini, déterminer l'opérateur comme étant le premier opérateur, et identifier et enregistrer l'opérateur.

3. Le dispositif selon la revendication 2, **caractérisé en ce que** le premier dispositif de suivi oculaire (13) est en outre configuré pour détecter en temps réel une période pendant laquelle le premier opérateur ne regarde pas le premier dispositif de réglage d'image (31) pour l'enseignement par démonstration, et pour désenregistrer le premier opérateur identifié et enregistré s'il est déterminé que la période dépasse un seuil d'interruption prédéfini.
